# FASCICULE DE BREVET EUROPEEN

(11) **EP 1 110 817 B1**
(45) Date de publication et mention de la délivrance du brevet: **24.10.2007**
(21) Numéro de dépôt: 00403460.9
(22) Date de dépôt: 08.12.2000
(51) Int. Cl.: B60Q 1/26

(54) **Procédé de réalisation d'un circuit d'alimentation de diodes électroluminescentes pour un feu de signalisation de véhicule**
Verfahren zum Herstellen einer Stromversorgung mit LED's für Kraftfahrzeugsignalleuchten
Process for designing a power circuit with LEDs for vehicle signaling light

(30) Priorité: 23.12.1999 FR 9916364
(43) Date de publication de la demande: 27.06.2001
(73) Titulaire: VALEO VISION, 93012 Bobigny Cédex (FR)
(72) Inventeur: Fleury, Benoist, 93012 Bobigny cédex (FR); Dera, Jean, 93012 Bobigny cédex (FR)
(74) Mandataire: Hervouet, Sylvie

(56) Documents cités:
- EP-A- 0 531 185
- EP-A- 0 633 163
- EP-A- 0 896 898

## Description

L'invention concerne les circuits d'alimentation pour composants électroniques tels que des diodes électroluminescentes (LED) et les feux de signalisation de véhicule automobile comportant un tel circuit.

Un tel feu de signalisation selon le préambule de la revendication 12 est connu de EP 0 896 898 A qui forme l'étal de la technique le plus proche.

Dans un tel feu de signalisation, il est généralement nécessaire que toutes les LED soient orientées dans la même direction. De plus, on cherche la plupart du temps à réaliser le circuit d'alimentation en courant et de support des LED par mise en forme d'un flan de forme initiale plane. Réaliser un circuit de forme générale plane à partir d'un tel flan ne pose pas de difficulté.

En revanche, si l'on souhaite réaliser un feu galbé dans au moins une direction, on prévoit en général de disposer les LED suivant une implantation régulière (en matrice) en vue de face. Or, cela est relativement contraignant. De plus, si le feu présente un galbe dans deux directions, il faut la plupart du temps plier le flanc suivant deux directions, ce qui est relativement compliqué.

Un but de l'invention est de permettre de réaliser de façon simple un circuit d'alimentation de LED pouvant avoir une disposition galbée, éventuellement dans deux plans différents, autre qu'une disposition en matrice, et ce à partir d'un flan plat.

En vue de la réalisation de ce but, on prévoit selon l'invention un procédé de réalisation d'un circuit d'alimentation pour des composants électroniques tels que des diodes électroluminescentes, comprenant des supports de composants, plans et parallèles entre eux, le procédé comprenant les étapes consistant à
- déterminer les positions relatives des supports ;
- déterminer s'il existe un ensemble de plans perpendiculaires aux supports, parallèles entre eux, passant chacun par au moins un support et tels que dans chaque plan, les supports ont des coordonnées respectives suivant un premier axe perpendiculaire aux supports, qui varient de façon monotone avec leurs abscisses suivant un deuxième axe parallèle aux supports et aux plans ;
- déterminer un plan de référence parallèle aux supports ;
- déterminer l'image de chaque support par une projection suivant un même axe de projection sur le plan de référence suivie par une translation suivant le deuxième axe d'une longueur égale à la cote du support suivant l'axe de projection ; et
- relier les images par des branches de connexion inscrites dans le plan de référence.

Ainsi, à partir de l'ensemble de positions de supports données, sous réserve de l'existence d'un ensemble de plans tel que précité, il sera toujours possible de définir un circuit d'alimentation des diodes en prévoyant des découpes de sorte qu'en pliant ultérieurement le circuit en différents endroits, le circuit soit apte à supporter et à alimenter les diodes dans leurs positions relatives initialement envisagées avec toutes les diodes orientées dans la même direction. Le procédé selon l'invention permet donc d'obtenir la disposition souhaitée pour les diodes à partir d'un circuit plan convenablement plié. Ce procédé a pour avantage qu'il est applicable à un très grand nombre de configurations de circuit. Notamment, les diodes peuvent se trouver dans un très grand nombre de plans différents. Le circuit peut présenter deux galbes dans deux directions différentes. Il n'est pas impératif que le circuit présente une seule courbure dans chaque direction de galbe. Ce procédé est notamment applicable à une disposition aléatoire des diodes pourvu que la condition géométrique précitée soit remplie. Un autre avantage du procédé est que le formage du flan peut se faire au moyen de plis tous parallèles entre eux. Cette direction de pliage unique simplifie le formage qui peut facilement être automatisé. Le procédé s'applique à un circuit dont le substrat est intégralement métallique, c'est-à-dire dans lequel les connexions sont déterminées par les seules découpes des différentes parties du substrat. Il s'applique également à un circuit dans lequel un substrat isolant flexible porte des traces métalliques conductrices.

Avantageusement, l'axe de projection est le premier axe.

Avantageusement, le plan de référence est celui dans lequel est inscrit le ou chaque support dont la cote constitue un extremum parmi les cotes des supports.

Avantageusement, on monte les composants sur les supports, puis on plie le circuit.

On prévoit de plus selon l'invention un flan pour un circuit d'alimentation de composants électroniques tels que des diodes électroluminescentes, comprenant des supports de composants, le flan étant de forme plane, dans lequel les supports sont disposés de sorte qu'il est possible de réaliser dans le flan des découpes telles qu'en formant des plis parallèles les uns aux autres, on peut donner au flan une forme telle que les supports sont plans et parallèles entre eux et au moins certains supports interceptés par un même plan parallèle aux plis et perpendiculaire aux supports ne sont pas coplanaires.

On prévoit également selon l'invention un flan pour un circuit d'alimentation de composants électroniques tels que des diodes électroluminescentes, comprenant des supports de composants, le flan étant de forme plane, le flan présentant des découpes disposées de sorte qu'en formant des plis parallèles les uns aux autres, on peut donner au flan une forme telle que les supports sont plans et parallèles entre eux et au moins certains supports interceptés par un même plan parallèle aux plis et perpendiculaire aux supports ne sont pas coplanaires.

On prévoit encore selon l'invention un circuit d'alimentation pour des composants électroniques tels que des diodes électroluminescentes, comprenant des supports de composants, plans et parallèles entre eux, et présentant des découpes, le circuit présentant des plis s'étendant tous suivant une même direction, dans lequel il existe parmi les supports des supports non coplanaires et interceptés par un même plan parallèle aux plis et perpendiculaire aux support, le circuit étant apte à prendre une forme plane par suppression des plis.

Avantageusement, le circuit comprend un substrat constitué par une matière électriquement conductrice, chaque support étant constitué par des parties de substrat séparées par une découpe.

Avantageusement, le circuit comprend un matériau électriquement isolant dans lequel sont réalisées les découpes.

Avantageusement, le circuit ou le flan porte des composants tels que des diodes électroluminescentes.

Avantageusement, les composants sont des diodes électroluminescentes orientées pour éclairer sensiblement dans la même direction.

On prévoit en outre selon l'invention un feu de signalisation pour véhicule comportant un circuit selon l'invention.

On prévoit en outre selon l'invention un appareil de mise en forme d'un flan selon l'invention, l'appareil comportant au moins deux platines mobiles l'une par rapport à l'autre, des moyens de fixation du flan aux platines de sorte que chaque platine est fixée à au moins un support respectif et des moyens de déplacement des platines à translation les unes par rapport aux autres.

De plus, cet appareil pourra présenter au moins l'une des caractéristiques suivantes :
- l'appareil comporte au moins trois platines mobiles les unes par rapport aux autres, les moyens de déplacement étant aptes à déplacer les platines les unes par rapport aux autres dans un ordre prédéterminé ;
- les moyens de déplacement comprennent au moins une glissière de guidage recevant une partie d'au moins une des platines ;
- au moins l'une des glissières comprend au moins un segment rectiligne ;
- au moins l'une des glissières comprend au moins une partie courbe ;
- les moyens de déplacement sont constitués de deux structures rigides mobiles l'une par rapport à l'autre ; et
- les moyens de déplacement comportent deux structures rigides mobiles l'une par rapport à l'autre, chaque platine étant reliée à chacune des deux structures.

D'autres caractéristiques et avantages de l'invention apparaîtront encore dans la description suivante d'un mode préféré de réalisation et de variantes donnés à titre d'exemples non limitatifs. Aux dessins annexés :
- les figures 1, 2, 4 et 5 illustrent les étapes du procédé de l'invention selon un mode préféré de mise en oeuvre ;
- la figure 3 est un schéma de transformations géométriques ;
- les figures 6 et 7 sont analogues aux figures 4 et 5 et illustrent une variante de mise en oeuvre ;
- la figure 8 est une vue en élévation d'un flan selon un mode préféré de réalisation de l'invention ;
- la figure 9 est une vue en perspective d'un circuit obtenu par mise en forme du flan de la figure 8 ;
- les figures 10 et 11 sont des vues analogues aux figures 8 et 9, illustrant un deuxième mode de réalisation, la figure 11 étant partielle ; et
- les figures 12 à 16 sont des vues d'un appareil de formage du flan de la figure 10 à différentes étapes du formage.

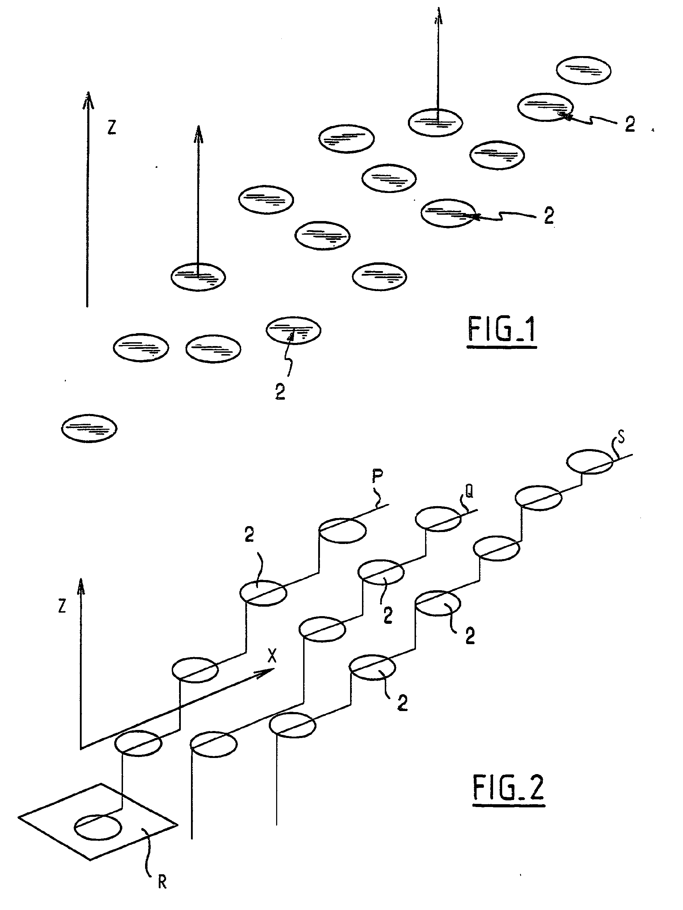

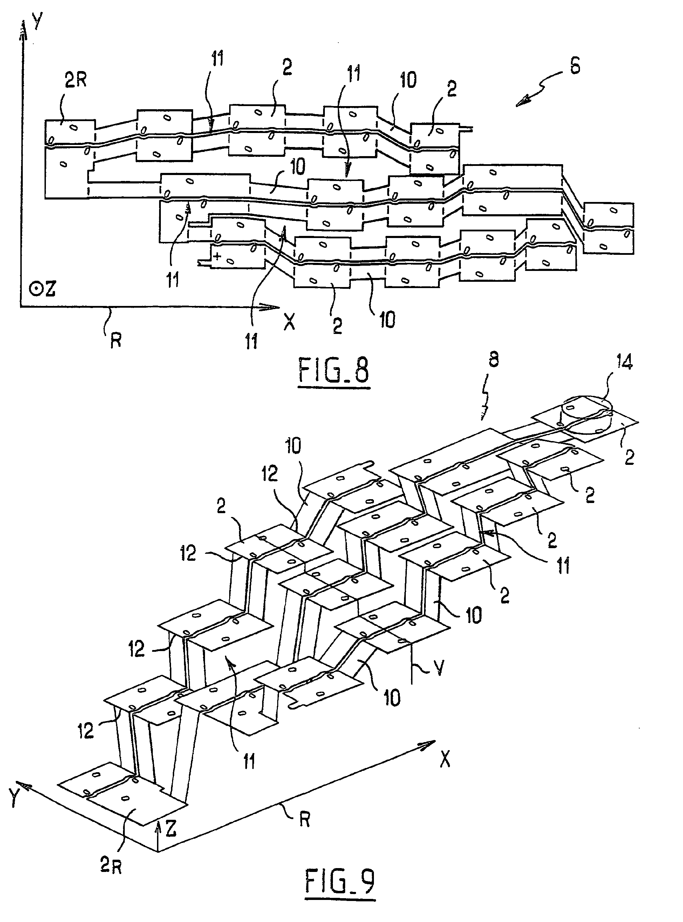

On va décrire en référence aux figures 1 à 5 un mode de mise en oeuvre du procédé selon l'invention pour la réalisation d'un flan 6 selon la figure 8 permettant lui-même de réaliser un circuit d'alimentation 8 de LED tel qu'illustré à la figure 9. Le circuit est ici destiné à un feu de signalisation de véhicule automobile, tel qu'un feu de stop supérieur central ou inférieur latéral.

En référence à la figure 1, on détermine tout d'abord les positions relatives des LED dans l'espace telles qu'on souhaite ces positions. Ce choix dépend notamment de la forme et de l'esthétique du feu. En supposant que le circuit d'alimentation comportera pour les LED des supports plans individuels respectifs 2, cela revient à déterminer la position de ces supports. La disposition des supports dans l'espace est ici très irrégulière. Par hypothèse, on cherche à concevoir un circuit dans lequel toutes les LED ont même axe, c'est-à-dire éclairent toutes dans la même direction. Nous appellerons Z cet axe. Les supports ont été représentés à ce stade par des disques plans, tous parallèles entre eux et par hypothèse perpendiculaires à l'axe Z. La plupart des supports 2 s'étendent dans des plans perpendiculaires à l'axe Z différents les uns des autres. De plus, dans la configuration choisie, il n'y a aucun alignement de trois supports 2. Les supports 2 se présentent ici comme un nuage de supports, à disposition aléatoire mise à part leur orientation commune Z.

Le procédé est applicable s'il existe au moins un ensemble de plans que nous appellerons ici plans de discrimination, perpendiculaires aux supports 2, parallèles entre eux, passant chacun par au moins un support, et tels que dans chaque plan, les supports ont des cotes respectives z suivant l'axe Z qui varient de façon monotone avec leur abscisse x suivant un axe X parallèle aux supports 2 et aux plans.

Le nuage de supports illustré à la figure 1 remplit effectivement cette condition. Ainsi, on a représenté à la figure 2 le même nuage de points qu'à la figure 1, ainsi que la trace de trois plans de discrimination P, Q et S. Ceux-ci sont perpendiculaires aux supports 2. Ils sont parallèles entre eux. Ils passent chacun par plusieurs supports 2 (le plan P passe par cinq supports, le plan Q par quatre supports et le plan S par six supports). On considère un axe X parallèle aux supports 2 et aux plans P, Q et S (et perpendiculaire à l'axe Z). Cet axe X permet de repérer chaque support 2ᵢ par une abscisse x₁. De même, on repère chaque support 2₁ par une cote z₁ suivant l'axe Z. Sachant que seule importe les positions relatives des supports au contraire de leurs positions dans l'absolu, la position de l'origine O du repère (X, Z) par rapport à laquelle on mesure x et z peut être arbitraire. On voit que dans chaque plan P, Q, S, la cote z₁ des supports 2ᵢ interceptés par ce plan varie de façon monotone à mesure que croît l'abscisse xᵢ. Par «varie de façon monotone», on entend que la cote zᵢ ne fait que croître (comme ici) ou que décroître au sens large. En l'espèce, la cote z₁ croît dans les trois plans. Toutefois, la cote des supports pourrait croître dans au moins un plan et décroître dans au moins un autre.

Il importe de souligner ici que le choix des plans de discrimination P, Q et S qui « relient » géométriquement d'une certaine façon les supports 2 entre eux ne préjuge en rien de la disposition future des connexions entre les supports, notamment des branches 10 de connexions présentées plus loin. Ainsi, certains supports appartenant à ce stade à des plans différents P, Q et S pourront à terme être directement reliés l'un à l'autre par des branches de connexion. De plus, il va de soi que pour un nuage de supports donné, on pourra en général déterminer plusieurs ensembles de plans de discrimination. L'important est qu'il existe au moins un tel ensemble.

On détermine ensuite un plan de référence R parallèle aux supports 2. Il est commode (et plus clair aux fins de la présente description) de choisir à cette fin un plan R dans lequel est inscrit l'un des supports 2 et à ce titre de préférence le support 2_{R} de cote z_{R} la plus haute ou la plus basse comme c'est le cas ici. Toutefois, ce plan de référence R peut être associé à l'un quelconque des supports 2. Il suffit même en définitive qu'il soit parallèle aux supports, même si aucun support n'est inscrit dans ce plan. Par commodité également, on prendra dorénavant le support 2_{R} pour l'origine 0 du repère (X, Y, Z).

L'étape suivante consiste à déterminer l'image de chaque support 2₁ par une projection suivant l'axe Z sur le plan R, suivie par une translation suivant l'axe X d'une longueur égale à la cote z₁ du support 2₁.

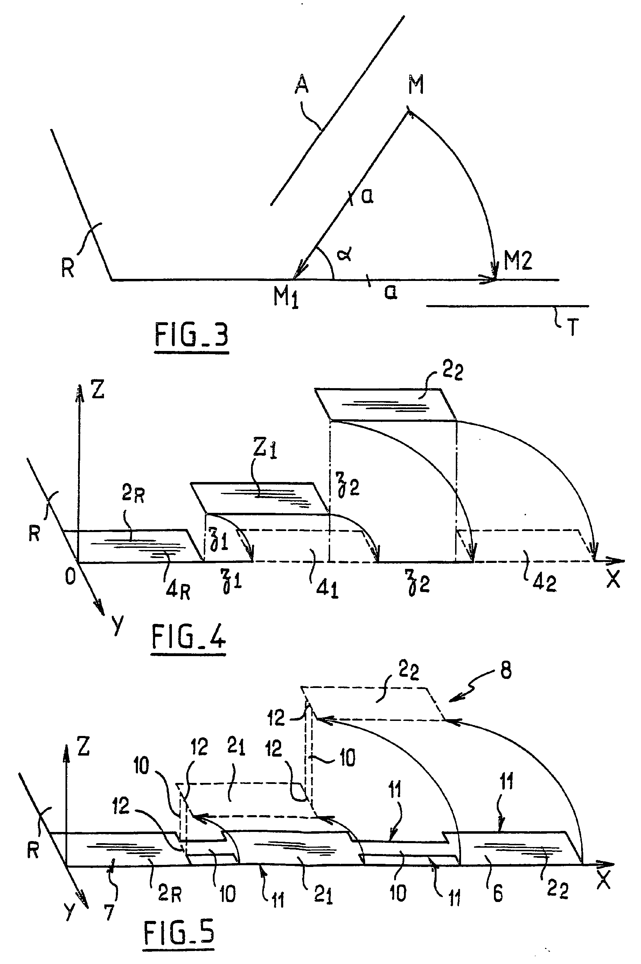

En préalable, on a illustré à la figure 3 une projection d'un point M sur un plan R suivant un axe de projection A quelconque non parallèle au plan R, suivie par une translation d'une longueur a égale à la distance a entre le point M et le plan R suivant l'axe A. M₁ est l'image de M par la projection et M₂ est l'image de M₁ par la translation. On rappelle que la composée de ces deux transformations est une rotation du point M autour de M₁ (dans un plan perpendiculaire au plan R et parallèle à l'axe A) sur un certain angle α indépendant de a. Pour plus de clarté, on a donc représenté à la figure 4 la transformation précitée par une rotation et non par la composée d'une projection et d'une translation.

Cette transformation est illustrée, pour quelques supports 2ᵢ seulement, à la figure 4. Pour plus de clarté, et puisque les directions X et Z sont maintenant déterminées, on a illustré les supports 2ᵢ par des rectangles et non plus par des cercles.

On détermine ainsi les images 4ᵢ des supports 2ᵢ dans le plan de référence R. La disposition de ces images sera celle des supports 4₁ dans le flan plan 6 illustré à la figure 5 qui permettra de réaliser le circuit 8. On remarquera que sur les figures 4 et 5, on a illustré trois supports 2_{R}, 2₁ et 2₂ placés en coïncidence pour être interceptés à leurs bords homologues par un même plan XOZ. Bien entendu, cette simplification ne vise qu'à une illustration claire de la transformation et il est entendu que c'est le nuage de la figure 1 qui subit la transformation. On aboutit ainsi à un nuage d'images 4ᵢ disposées à plat dans le plan R.

En référence à la figure 5, on reporte ensuite ces images 4ᵢ sur une feuille de métal 7 pour matérialiser les supports 2₁.

Puis on délimite sur ces feuilles des branches 10 disposées de la façon la plus adaptée pour connecter électriquement les supports 2ᵢ entre eux.

Ensuite on ménage dans la feuille 7 des découpes 11 pour individualiser les supports 2ᵢ et les branches 10. On aboutit alors à un flan 6.

Il suffit ensuite de plier la feuille 7 au moyen de plis 12 tous parallèles entre eux, et parallèles à une direction Y commune perpendiculaire aux axes X et Z. Les plis 12 peuvent par exemple s'étendre aux extrémités des branches 10 contiguës aux supports 2ᵢ. Au moyen de ces plis, on met le circuit 8 en forme. Grâce au procédé, chaque support 2 peut ainsi occuper la position initialement choisie pour lui à la figure 1.

On a illustré aux figures 8 et 9 le flan 6 et le circuit 8 correspondant au nuage de la figure 1. On remarque que les supports 2 forment une arborescence. De plus, chaque support 2ᵢ et les branches contiguës 10 sont en fait subdivisés en deux parties séparées l'une de l'autre par une découpe médiane 11 mais connectées par continuité de matière aux parties homologues adjacentes afin de permettre la connexion du circuit et de chaque diode à deux potentiels électriques différents. Sur le flan plan 6 de la figure 8, certaines des branches 10 sont inclinées par rapport à l'axe X compte tenu du décalage suivant l'axe Y des branches qu'elles relient. Puisque tous les plis 12 sont parallèles entre eux, la mise en forme du circuit, illustré à la figure 9, est particulièrement simple. Le circuit 8 peut alors recevoir les LED 14 sur leurs supports respectifs 2ᵢ. Les LED peuvent cependant être fixées au flan avant formage.

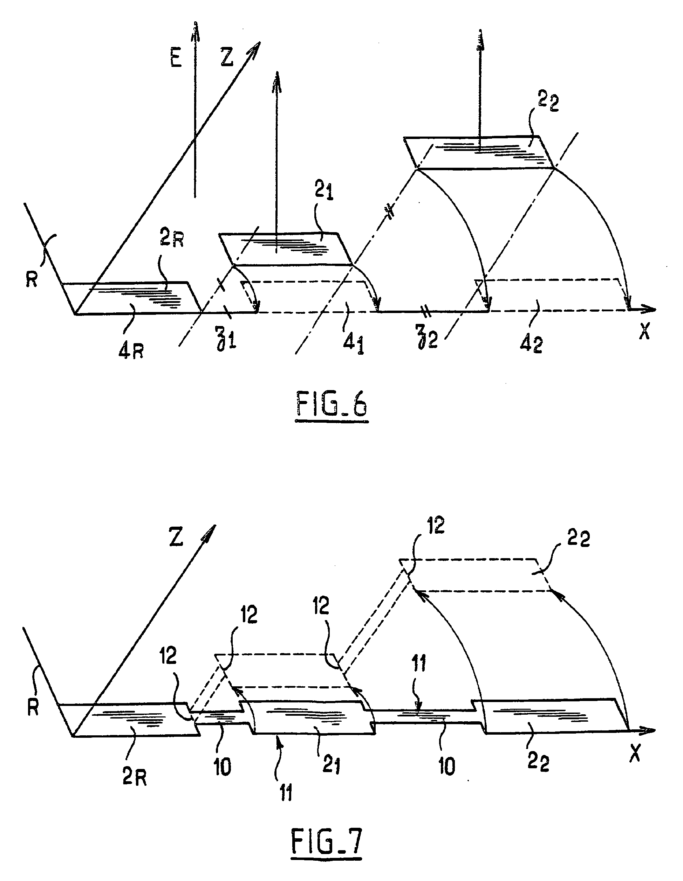

On a illustré aux figures 6 et 7 une variante de mise en oeuvre du procédé selon l'invention. Les étapes illustrées aux figures 1 et 2 sont inchangées à ceci près que sur ces figures l'axe définissant la direction d'éclairage est désigné par E. La disposition des supports est inchangée. Cette fois, l'axe de projection Z est seulement l'axe définissant la direction de projection sur le plan R. C'est également suivant cet axe Z qu'est mesurée la cote z₁ définissant la longueur de la translation. Cette variante dans laquelle les axes de projection Z et d'éclairage E ne sont pas confondus, au contraire du cas de la figure 4, illustre en fait le cas le plus général. Cette variante est bien adaptée lorsque les images des supports 2₁ par une simple projection sur le plan R parallèlement à l'axe d'éclairage E ne seraient pas jointives (alors qu'elles sont jointives dans le cas de la figure 4). L'axe de projection Z est choisi pour que les images des supports par la seule projection sur le plan R parallèlement à l'axe Z soient jointives. En effet dans un tel cas, les images finales 4₁ (par la projection suivie de la translation) ainsi positionnées sur le plan de référence R sont plus proches les unes des autres que si l'on choisissait de confondre les axes Z et E. Les branches 10 peuvent donc être courtes, en présentant après pliage une inclinaison par rapport à l'axe d'éclairage E égale à l'inclinaison de l'axe Z par rapport à l'axe E.

Si l'on confondait dans ce cas aussi l'axe Z avec l'axe E, on réussirait tout de même à réaliser un flan 6 et un circuit 8 convenables, mais l'étendue du flan 6 dans le plan R serait plus importante, ce qui utiliserait plus de matière. En revanche, les branches 10 s'étendraient toutes suivant l'une au moins des directions E ou X en pouvant être elles-mêmes pliées.

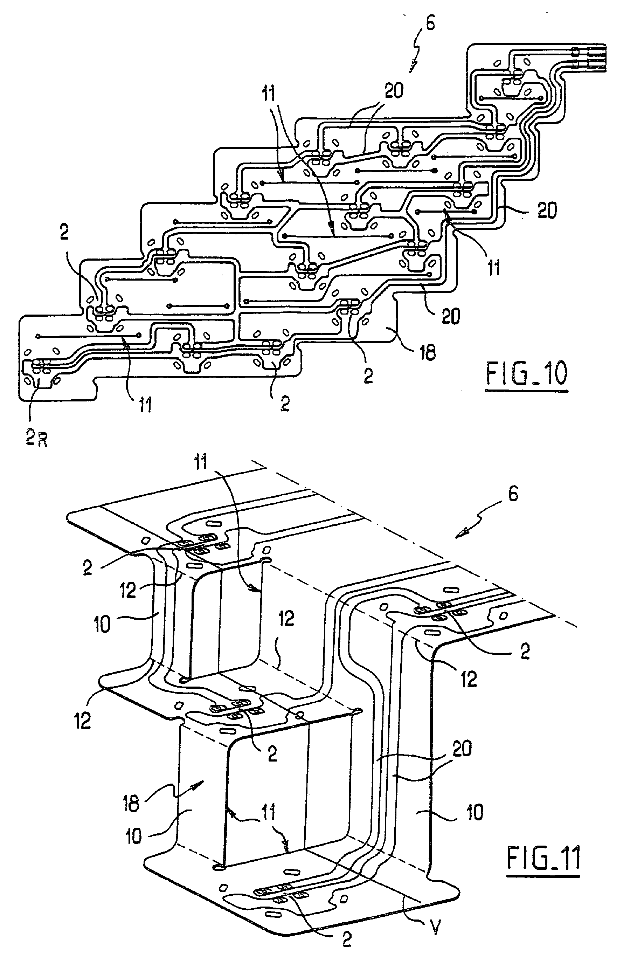

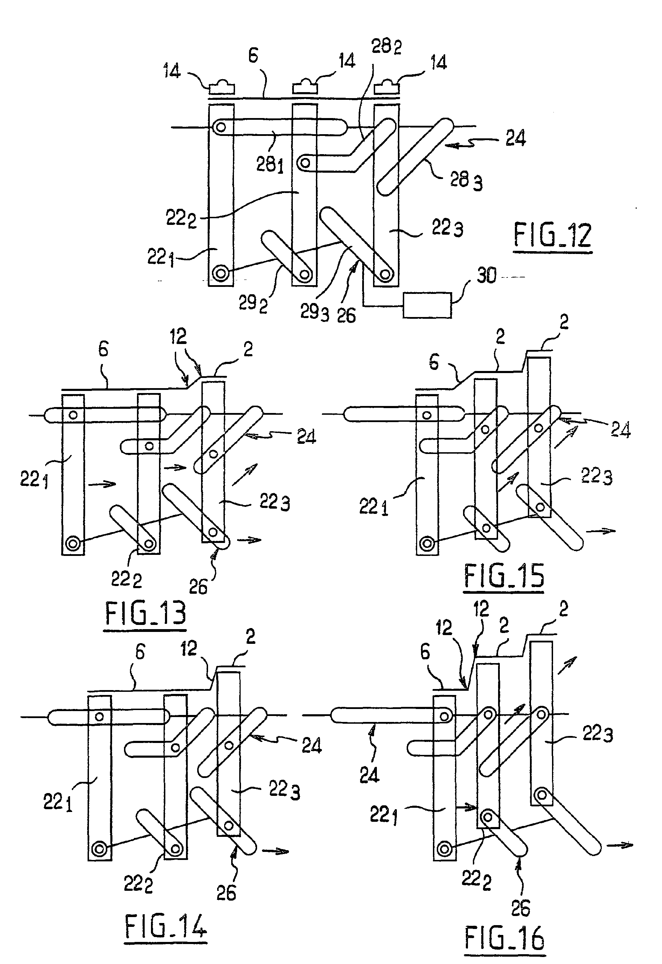

En référence aux figures 10 et 11, le mode de mise en oeuvre qui vient d'être décrit est adaptable à la réalisation d'un circuit 6 comportant un substrat flexible 18 électriquement isolant portant des traces électriquement conductrices 20 connectant les supports 2ᵢ entre eux. Un tel circuit a pour avantage que les découpes 11 ne visent plus qu'à permettre la déformation du flan en séparant certaines de ses parties, alors que dans le cas du circuit entièrement conducteur de la figure 8, les découpes 11 définissaient en outre la répartition des potentiels. Comme le montrent les figures 10 et 11, les découpes 11 peuvent dans ce cas se limiter à quelques segments rectilignes tous parallèles entre eux et convenablement positionnés.

A partir du flan ainsi découpé, on peut déformer le flan 6 pour donner aux supports 2ᵢ la position souhaitée. Ici encore, tous les plis 12 sont parallèles à l'axe Y. Ils sont en outre perpendiculaires aux découpes 11. Ces découpes génèrent des branches 10 entre les supports 2. Le flan de la figure 10 permet lui aussi d'obtenir la disposition souhaitée pour les supports 2 du nuage de la figure 1. On remarquera que la direction des découpes 11 sur la figure 10 n'est pas la même par rapport aux supports 2 que la direction générale des découpes 11 du flan de la figure 6.

On voit que sur le circuit de la figure 9, de même que sur celui de la figure 11, au moins certains supports 2, interceptés par un même plan V parallèle aux plis 12 et perpendiculaire aux supports, ne sont pas coplanaires les uns avec les autres.

On a illustré aux figures 12 à 16 un appareil de mise en forme d'un flan du type de celui de la figure 10 pour l'obtention d'un circuit du type de celui de la figure 11. Cet appareil 20 a ici, pour plus de clarté, été illustré sous forme simplifiée, avec un flan également simplifié. Il va de soi que le principe des moyens de l'appareil peut être adapté à un circuit plus élaboré. En l'espèce, le flan porte déjà les LED 14 avant sa mise en forme.

L'appareil comporte plusieurs platines ou plots 22₁ indépendantes les unes des autres et des moyens de fixation du flan plan 6 aux platines 22ᵢ de sorte que chaque platine est fixée à un support 2, sur sa face opposée à la LED 14. Des moyens de fixation amovibles classiques (vis, attaches, ...) pourront être employés.

Dans le présent mode de réalisation, l'appareil comporte deux structures ou cadres rigides 24, 26, mobiles l'un par rapport à l'autre. On conviendra ici que la structure supérieure 24 est fixe. La structure supérieure 24 comporte trois glissières 28₁, 28₂ et 28₃. Chaque glissière 28₁ reçoit à coulissement un doigt formant une partie de la platine 22ᵢ. Les glissières sont ici associées aux platines de façon bijective. La glissière 28₁ est rectiligne horizontale. La glissière 28₂ présente deux segments rectilignes respectivement horizontaux et inclinés formant un coude. La glissière 28₃ est rectiligne inclinée.

La structure inférieure mobile 26 est reliée à un doigt de la platine 22₁, par une liaison pivot. La structure inférieure comporte deux glissières 29₂, 29₃ associées de façon bijective aux platines 22₂ et 22₃, toutes deux rectilignes, inclinées et parallèles entre elles.

L'appareil comporte des moyens de déplacement 30 de la structure inférieure 26 par rapport à la structure supérieure 24. Ces moyens comprennent des moyens d'actionnement et des moyens de guidage à coulissement horizontal de la structure inférieure 26. L'appareil, au cours de son fonctionnement, déplace les platines 22₁ à translation les unes par rapport aux autres et dans un ordre prédéterminé. Chaque platine 22₁ est assujettie à un mouvement à translation compte tenu de sa liaison avec chacune des deux structures 24, 26 et compte tenu de la configuration de ces deux structures.

En référence à la figure 13, dans la position de départ, la structure inférieure 26 est à l'extrémité de sa course vers la gauche. Les extrémités supérieures des platines portant les supports sont coplanaires et à une même hauteur. Lorsque la structure inférieure 26 commence à coulisser vers la droite, les trois platines sont translatées vers la droite. De plus, les glissières 28₃, 29₃ forcent en même temps la platine 22₃ à translater vers le haut. La translation de la troisième platine 22₃ se fait donc dans une direction globalement inclinée.

Ce mouvement se poursuit de la même façon comme le montre la figure 14. Compte tenu de la fixation rigide des supports 2₁ aux platines 22₁, les supports 2ᵢ suivent les mêmes mouvements et ces mouvements génèrent sur le flan 6 deux plis 12 respectivement en creux et en relief entre les platines 22₂ et 22₃.

En référence à la figure 15, le coulissement vers la droite de la structure inférieure 26 se poursuit ainsi que le coulissement de la platine 22₃ vers la droite et le haut. Puisque la platine 22₂ passe le coude de la glissière 28₂, elle suit ensuite le même mouvement de coulissement vers le haut et la droite, ce qui génère pareillement deux plis entre les platines 22₁ et 22₂. Ces mouvements se poursuivent sur la figure 16.

A la fin de la course de la structure inférieure 26, la platine 22₁ n'aura coulissé que vers la droite par rapport à sa position initiale. Le circuit 8 est alors formé. On voit donc que la mise en forme du flan a lieu du simple fait du coulissement de la structure inférieure 26 comme un seul bloc.

Pour la mise en forme d'un flan tel que celui de la figure 8, on utilisera un appareil du même type en donnant de préférence cette fois aux glissières 28₁ et 29₁, une forme courbe. Chaque glissière comprendra par exemple un ou plusieurs arcs de cercle.

Bien entendu, on pourra apporter à l'invention de nombreuses modifications sans sortir du cadre de celle-ci.

Le circuit pourra être prévu en outre pour des composants électroniques autres que des LED tels que les résistances, les condensateurs, les transistors, les circuits intégrés, les connecteurs et ce, en technologie traversant ou CSM (composants pour montage en surface), en technologie couche épaisse, en sérigraphie ou en technologie couche mince.

Il pourra être destiné à un autre dispositif qu'un feu.

## Revendications

1. Procédé de réalisation d'un circuit d'alimentation (6) pour des composants électroniques (14) tels que des diodes électroluminescentes, comprenant des supports de composants (2), plans et parallèles entre eux, **caractérisé en ce qu'**il comprend les étapes consistant à :
- déterminer les positions relatives des supports (2)
- déterminer s'il existe un ensemble de plans (P, Q, S) perpendiculaires aux supports, parallèles entre eux, passant chacun par au moins un support (2) et tels que dans chaque plan (P, Q, S), les supports (2) ont des coordonnées respectives suivant un premier axe (E) perpendiculaire aux supports, qui varient de façon monotone avec leurs abscisses (xᵢ) suivant un deuxième axe (X) parallèle aux supports (2) et aux plans (P, Q, S) ;
- déterminer un plan de référence (R) parallèle aux supports ;
- déterminer l'image (4₁) de chaque support (2ᵢ) par une projection suivant un même axe de projection (Z) sur le plan de référence (R) suivie par une translation suivant le deuxième axe (X) d'une longueur égale à la cote (z₁) du support (2₁) suivant l'axe de projection (Z) ; et
- relier les images (4₁) par des branches de connexion (10) inscrites dans le plan de référence (R).

2. Procédé selon la revendication 1, **caractérisé en ce que** l'axe de projection (Z) est le premier axe (E) .

3. Procédé selon la revendication 1 ou 2, **caractérisé en ce que** le plan de référence (R) est celui dans lequel est inscrit le ou chaque support (2_{R}) dont la cote (Z_{R}) constitue un extremum parmi les cotes (z₁) des supports (2ᵢ) .

4. Procédé selon l'une des revendications 1 à 3, **caractérisé en ce qu'**on monte les composants sur les supports, puis on plie le circuit.

5. Flan (6) pour un circuit d'alimentation de composants électroniques (14) tels que des diodes électroluminescentes, comprenant des supports (2) de composants, le flan étant de forme plane, **caractérisé en ce que** les supports (2) sont disposés de sorte qu'il est possible de réaliser dans le flan des découpes (11) telles qu'en formant des plis (12) parallèles les uns aux autres, on peut donner au flan une forme (8) telle que les supports (2) sont plans et parallèles entre eux et au moins certains supports interceptés par un même plan (V) parallèle aux plis (12) et perpendiculaire aux supports ne sont pas coplanaires.

6. Flan (6) pour un circuit d'alimentation de composants électroniques tels que des diodes électroluminescentes (14), comprenant des supports (2) de composants, le flan étant de forme plane, **caractérisé en ce que** le flan présente des découpes (11) disposées de sorte qu'en formant des plis (12) parallèles les uns aux autres, on peut donner au flan une forme (8) telle que les supports (2) sont plans et parallèles entre eux et au moins certains supports (2) interceptés par un même plan (V) parallèle aux plis (12) et perpendiculaire aux supports ne sont pas coplanaires.

7. Circuit d'alimentation (8) pour des composants électroniques tels que des diodes électroluminescentes (14) comprenant des supports (2) de composants, plans et parallèles entre eux, et présentant des découpes (11), **caractérisé en ce qu'**il présente des plis (12) s'étendant tous suivant une même direction, **en ce qu'**il existe parmi les supports des supports non coplanaires et interceptés par un même plan (V) parallèle aux plis et perpendiculaire aux support, et **en ce que** le circuit (8) est apte à prendre une forme plane (6) par suppression des plis (12).

8. Circuit selon la revendication 7, **caractérisé en ce qu'**il comprend un substrat constitué par une matière électriquement conductrice, chaque support (2) étant constitué par des parties de substrat séparées par une découpe (11).

9. Circuit selon la revendication 7, **caractérisé en ce qu'**il comprend un matériau électriquement isolant (18) dans lequel sont réalisées les découpes (11).

10. Circuit ou flan selon l'une quelconque des revendications 5 à 9, **caractérisé en ce que** le circuit (8) ou le flan (6) porte des composants tels que des diodes électroluminescentes (14) .

11. Circuit selon la revendication 10, **caractérisé en ce que** les composants sont des diodes électroluminescentes orientées pour éclairer sensiblement dans la même direction.

12. Feu de signalisation pour véhicule, **caractérisé en ce qu'**il comporte un circuit (8) selon l'une quelconque des revendications 7 à 10.

13. Appareil de mise en forme d'un flan (6) selon l'une des revendications 5, 6 ou 10, **caractérisé en ce qu'**il comporte :
- au moins deux platines (22₁, 22₂, 22₃) mobiles l'une par rapport à l'autre ;
- des moyens de fixation du flan (6) aux platines de sorte que chaque platine (22₁) est fixée à au moins un support (2₁) respectif ; et
- des moyens de déplacement (24, 26) des platines à translation les unes par rapport aux autres.

14. Appareil selon la revendication 13, **caractérisé en ce qu'**il comporte au moins trois platines (22₁, 22₂, 22₃) mobiles les unes par rapport aux autres, les moyens de déplacement (24, 26) étant aptes à déplacer les platines les unes par rapport aux autres dans un ordre prédéterminé.

15. Appareil selon la revendication 13 ou 14, **caractérisé en ce que** les moyens de déplacement comprennent au moins une glissière de guidage (28₁, 28₂, 28₃, 29₂, 29₃) recevant une partie d'au moins une des platines.

16. Appareil selon la revendication 15, **caractérisé en ce qu'**au moins l'une des glissières comprend au moins un segment rectiligne.

17. Appareil selon la revendication 15 ou 16, **caractérisé en ce qu'**au moins l'une des glissières comprend au moins une partie courbe.

18. Appareil selon l'une quelconque des revendications 13 à 17, **caractérisé en ce que** les moyens de déplacement (24, 26) sont constitués de deux structures rigides mobiles l'une par rapport à l'autre.

19. Appareil selon l'une quelconque des revendications 13 à 18, **caractérisé en ce que** les moyens de déplacement comportent deux structures rigides (24, 26) mobiles l'une par rapport à l'autre, chaque platine (22₁, 22₂, 22₃) étant reliée à chacune des deux structures.

## Claims

1. Method for production of a supply circuit (6) for electronic components (14) such as electroluminescent diodes, comprising component supports (2) which are flat and parallel to one another, **characterised in that** it comprises steps consisting of:
- determining the relative positions of the supports (2);
- determining whether there exists a series of planes (P, Q, S) perpendicular to the supports, which are parallel to one another, and each pass via at least one support (2), and are such that, on each plane (P, Q, S), the supports (2) have respective co-ordinates according to a first axis (E) perpendicular to the supports, which vary in a monotonic manner in relation to their x-axes (xᵢ) in accordance with a second axis (X) which is parallel to the supports (2) and to the planes (P, Q, S);
- determining a reference plane (R) parallel to the supports;
- determining the image (4₁) of each support (2ᵢ) by means of projection according to a single axis of projection (Z) on the reference plane (R), followed by translation according to the second axis (X) by a length which is equal to the dimension (z₁) of the support (2₁) according to the axis of projection (Z); and
- connecting the images (4₁) by means of connection branches (10) which are entered on the reference plane (R).

2. Method according to claim 1, **characterised in that** the axis of projection (Z) is the first axis (E).

3. Method according to claim 1 or claim 2, **characterised in that** the reference plane (R) is that on which there is entered the or each support (2_{R}), the dimension (Z_{R}) of which constitutes an extremum amongst the dimensions (z₁) of the supports (2ᵢ).

4. Method according to any one of claims 1 to 3, **characterised in that** the components are fitted onto the supports, and the circuit is then folded.

5. Panel (6) for a supply circuit for electronic components (14) such as electroluminescent diodes, comprising supports (2) for components, the panel having a flat form, **characterised in that** the supports (2) are disposed such that it is possible to provide in the blank cut-outs (11), such that by forming folds (12) parallel to one another, it is possible to provide the blank with a form (8) such that the supports (2) are flat and parallel to one another, and at least certain supports which are intercepted by a single plane (V) parallel to the folds (12) and perpendicular to the supports are not coplanar.

6. Panel (6) for a supply circuit for electronic components (14) such as electroluminescent diodes, comprising supports (2) for components, the panel having a flat form, **characterised in that** the panel has cut-outs (11) disposed such that, by forming folds (12) which are parallel to one another, it is possible to provide the panel with a form (8) such that the supports (2) are flat and parallel to one another, and at least certain supports (2) which are intercepted by a single plane (V) parallel to the folds (12) and perpendicular to the supports are not coplanar.

7. Supply circuit (8) for electronic components such as electroluminescent diodes (14) comprising supports (2) for components, which are flat and parallel to one another, and have cut-outs (11), **characterised in that** it has folds (12) which all extend according to a single direction, **in that** amongst the supports there exist supports which are non-coplanar, and are intercepted by a single plane (V) parallel to the folds and perpendicular to the support, and **in that** the circuit (8) can assume a flat form (6) by means of elimination of the folds (12).

8. Circuit according to claim 7, **characterised in that** it comprises a substrate constituted by an electrically conductive material, each support (2) being constituted by parts of substrate which are separated by a cut-out (11).

9. Circuit according to claim 7, **characterised in that** it comprises an electrically insulating material (18) in which the poocut-outs are provided (11).

10. Circuit or panel according to any one of claims 5 to 9, **characterised in that** the circuit (8) or the panel (6) supports components such as electroluminescent diodes (14).

11. Circuit according to claim 10, **characterised in that** it the components are electroluminescent diodes which are oriented in order to light substantially in the same direction.

12. Signalling light for a vehicle, **characterised in that** it comprises a circuit (8) according to any one of claims 7 to 10.

13. Device for forming a panel (6) according to any one of claims 5, 6, or 10, **characterised in that** it comprises:
- at least two plates (22₁, 22₂, 22₃) which are mobile relative to one another;
- means for securing the panel (6) to the plates, such that each plate (22₁) is secured to at least one respective support (2₁); and
- means (24, 26) for displacement of the plates in translation relative to one another.

14. Device according to claim 13, **characterised in that** it comprises at least three plates (22₁, 22₂, 22₃) which are mobile relative to one another, the means (24, 26) for displacement being able to displace the plates relative to one another in a predetermined order.

15. Device according to claim 13 or 14, **characterised in that** the means for displacement comprise at least one guide slide (28₁, 28₂, 28₃, 29₂, 29₃) which receives part of at least one of the plates.

16. Device according to claim 15, **characterised in that** at least one of the slides comprises at least one straight segment.

17. Device according to claim 15 or claim 16, **characterised in that** at least one of the slides comprises at least one curved part.

18. Device according to any one of claims 13 to 17, **characterised in that** the means (24, 26) for displacement consist of two rigid structures which are mobile relative to one another.

19. Device according to claims 13 to 18, **characterised in that** the means for displacement comprise two rigid structures (24, 26) which are mobile relative to one another, each plate (22₁, 22₂, 22₃) being connected to each of the two structures.

## Patentansprüche

1. Verfahren zum Herstellen einer Versorgungsschaltung (6) für elektronische Bauteile (14) wie Leuchtdioden, mit flachen und zueinander parallelen Bauteilträgern (2),
**dadurch gekennzeichnet, dass** es die folgenden Schritte umfasst:
- Festlegen der relativen Positionen der Träger (2);
- Bestimmen, ob eine Gruppe von Ebenen (P, Q, S) vorhanden ist, die zu den Trägern lotrecht und zueinander parallel sind und jeweils durch wenigstens einen Träger (2) solchermaßen verlaufen, dass die Träger (2) in jeder Ebene (P, Q, S) entsprechende Koordinaten entlang einer ersten, zu den Trägern lotrechten Achse (E) haben, die sich mit ihren Abszissen (xᵢ) entlang einer zweiten, zu den Trägern (2) und den Ebenen (P, Q, S) parallelen Achse (X) gleichförmig verändern;
- Ermitteln einer zu den Trägern parallelen Bezugsebene (R);
- Bestimmen der Abbildung (4ᵢ) eines jeden Trägers (2ᵢ) durch eine Projektion entlang ein und derselben Projektionsachse (Z) auf der Bezugsebene (R), gefolgt von einer Translation entlang der zweiten Achse (X) um eine Länge, die der Seite (zᵢ) des Trägers (2ᵢ) entlang der Projektionsachse (Z) entspricht, und
- Verbinden der Abbildungen (4ᵢ) durch in der Bezugsebene (R) liegende Anschlussstränge (10).

2. Verfahren nach Anspruch 1,
**dadurch gekennzeichnet, dass** die Projektionsachse (Z) die erste Achse (E) ist.

3. Verfahren nach Anspruch 1 oder 2,
**dadurch gekennzeichnet, dass** die Bezugsebene (R) diejenige Ebene ist, in welcher der oder jeder Träger (2_{R}) liegt, dessen Seite (Z_{R}) einen Extremwert unter den Seiten (zᵢ) der Träger (2ᵢ) darstellt.

4. Verfahren nach einem der Ansprüche 1 bis 3,
**dadurch gekennzeichnet, dass** die Bauteile auf den Trägern angebracht werden und die Versorgungsschaltung anschließend umgebogen wird.

5. Platte (6) für eine Versorgungsschaltung elektronischer Bauteile (14) wie Leuchtdioden, mit Bauteilträgern (2), wobei die Platte eine ebene Form hat,
**dadurch gekennzeichnet, dass** die Träger (2) derart angeordnet sind, dass es möglich ist, in der Platte Einschnitte (11) solchermaßen vorzunehmen, dass der Platte durch Formen von zueinander parallelen Biegungen (12) eine Form (8) verliehen werden kann, derart, dass die Träger (2) eben und zueinander parallel sind und wenigstens einige Träger, die von ein und derselben zu den Biegungen (12) parallelen und zu den Trägern lotrechten Ebene (V) erfasst werden, nicht koplanar sind.

6. Platte (6) für eine Versorgungsschaltung elektronischer Bauteile, wie Leuchtdioden (14), mit Trägern (2), wobei die Platte eine ebene Form hat,
**dadurch gekennzeichnet, dass** die Platte Einschnitte (11) aufweist, die solchermaßen angeordnet sind, dass der Platte durch Formen von zueinander parallelen Biegungen (12) eine Form (8) verliehen werden kann, derart, dass die Träger (2) eben und zueinander parallel sind und wenigstens einige Träger (2), die durch ein und dieselbe zu den Biegungen (12) parallele und zu den Trägern lotrechte Ebene (V) erfasst werden, nicht koplanar sind.

7. Versorgungsschaltung (8) für elektronische Bauteile wie Leuchtdioden (14), die ebene und zueinander parallele Bauteilträger (2) umfasst und Einschnitte (11) aufweist,
**dadurch gekennzeichnet, dass** sie Biegungen (12) aufweist, die sich alle in derselben Richtung erstrecken, dass unter den Trägern nicht koplanare Träger existieren, die von ein und derselben zu den Biegungen parallelen und zu den Trägern lotrechten Ebene (V) erfasst werden, und dass die Schaltung (8) durch Entfernen der Biegungen (12) eine ebene Form (6) anzunehmen vermag.

8. Versorgungsschaltung nach Anspruch 7,
**dadurch gekennzeichnet, dass** sie ein Trägermaterial aufweist, das aus einem elektrisch leitenden Stoff gebildet ist, wobei jeder Träger (2) durch Trägermaterialteile gebildet ist, die durch einen Einschnitt (11) getrennt sind.

9. Versorgungsschaltung nach Anspruch 7,
**dadurch gekennzeichnet, dass** er ein elektrisch isolierendes Material (18) aufweist, in dem die Einschnitte (11) ausgeführt sind.

10. Versorgungsschaltung oder Platte nach einem der Ansprüche 5 bis 9,
**dadurch gekennzeichnet, dass** die Schaltung oder die Platte (6) Bauteile wie etwa Leuchtdioden (14) trägt.

11. Versorgungsschaltung nach Anspruch 11,
**dadurch gekennzeichnet, dass** die Bauteile Leuchtdioden sind, die ausgerichtet sind, um im Wesentlichen in dieselbe Richtung zu leuchten.

12. Signalgebungsleuchte für Fahrzeuge,
**dadurch gekennzeichnet, dass** sie eine Schaltung (8) nach einem der Ansprüche 7 bis 10 umfasst.

13. Gerät zum Formen einer Platte (6) nach einem der Ansprüche 5, 6 oder 10,
**dadurch gekennzeichnet, dass** es umfasst:
- wenigstens zwei bezüglich einander bewegliche Platinen (22₁, 22₂, 22₃);
- Mittel zum Befestigen der Platte (6) an den Platinen derart, dass jede Platine (22ᵢ) an wenigstens einem entsprechenden Träger (2ᵢ) befestigt ist; und
- Mittel zum translatorischen Verlagern (24, 26) der Platinen bezüglich einander.

14. Gerät nach Anspruch 13,
**dadurch gekennzeichnet, dass** es wenigstens drei bezüglich einander bewegliche Platinen (22₁, 22₂, 22₃) umfasst, wobei die Verlagerungsmittel (24, 26) die Platinen bezüglich einander in eine vorbestimmte Reihe zu verschieben vermögen.

15. Gerät nach Anspruch 13 oder 14,
**dadurch gekennzeichnet, dass** die Verlagerungsmittel wenigstens eine Führungsgleitschiene (28₁, 28₂, 28₃, 29₂, 29₃) aufweisen, die einen Teil wenigstens einer der Platinen aufnimmt.

16. Gerät nach Anspruch 15,
**dadurch gekennzeichnet, dass** wenigstens eine der Gleitschienen wenigstens einen geradlinigen Abschnitt aufweist.

17. Gerät nach Anspruch 15 oder 16,
**dadurch gekennzeichnet, dass** wenigstens eine der Gleitschienen wenigstens einen gebogenen Teil aufweist.

18. Gerät nach einem der Ansprüche 13 bis 17,
**dadurch gekennzeichnet, dass** die Verlagerungsmittel (24, 26) aus zwei starren, bezüglichen einander beweglichen Strukturen gebildet sind.

19. Gerät nach einem der Ansprüche 13 bis 18,
**dadurch gekennzeichnet, dass** die Verlagerungsmittel zwei starre, bezüglich einander bewegliche Strukturen (24, 26) aufweisen, wobei jede Platine (22₁, 22₂, 22₃) mit jeder der beiden Strukturen verbunden ist.
